# DEMANDE DE BREVET EUROPEEN

(11) **EP 1 829 725 A2**
(43) Date de publication de la demande: **05.09.2007**
(21) Numéro de dépôt: 07300838.5
(22) Date de dépôt: 01.03.2007
(51) Int. Cl.: B60K 6/04

(54) **Agencement d'une machine électrique tournante dans un moteur à combustion interne et véhicule automobile comportant un tel agencement d'un moteur thermique et d'une machine électrique**

(30) Priorité: 02.03.2006 FR 0650725; 28.02.2007 FR 0753560
(71) Demandeur: Peugeot Citroen Automobiles SA, 92250 La Garenne Colombes (FR)
(72) Inventeur: Escat, Vincent, 75017 Paris (FR); Noiret, Christian, 78230 Le Pecq (FR)
(74) Mandataire: Ménès, Catherine

(57) **Abrégé**

L'invention a pour objet un agencement d'une machine électrique formée d'éléments discoïdes dans un moteur à combustion interne comportant un bloc moteur (3) avec une pluralité de cylindres dont les pistons sont associés à un vilebrequin (1) et un volant moteur (4), , caractérisé en ce que la machine électrique comporte au moins un premier stator solidaire d'une face (3A) du bloc-moteur (3) située en regard du volant moteur et un rotor solidaire du volant moteur (4), la machine électrique étant distante radialement du vilebrequin (1) et disposée de part et d'autre de la face d'appui (8) du volant moteur (4) sur le vilebrequin (1).

L'invention a également pour objet un véhicule équipé d'un tel agencement.

## Description

La présente invention concerne un agencement d'une machine électrique tournante, comportant une partie formant stator et une partie formant rotor, dans un moteur à combustion interne, également appelé moteur thermique, la rotation de l'arbre du moteur thermique étant transmise au rotor de la machine électrique (et inversement lorsque la machine électrique sert au démarrage du moteur thermique).

Les contraintes d'implantation des groupes motopropulseurs dans des véhicules sont de plus en plus sévères, et cela notamment du fait du nombre d'accessoires à implanter en plus du moteur proprement dit, et aussi en raison des normes de protection, y compris de protection de piétons, et de dépollution. Par ailleurs, de nouvelles fonctions telles que l'utilisation d'une machine électrique tournante unique réunissant en elle les fonctions de démarreur et de générateur, imposent des contraintes supplémentaires telles que le dimensionnement de la transmission de mouvement entre la machine électrique et le moteur thermique et la taille de la machine électrique tournante elle-même.

En outre, les compartiments moteur des véhicules actuels sont calculés au plus juste, ce qui a pour conséquence que la place disponible pour une chaîne de traction hybride (thermique + électrique) est souvent très limitée.

Pour résoudre le problème du manque de place dans le compartiment moteur d'un véhicule automobile, certains éléments sont rendus indépendants de l'entraînement mécanique venant du moteur thermique grâce à l'entraînement par un ou des moteurs électriques. D'autres solutions sont trouvées en repensant complètement l'architecture du moteur thermique et notamment en repositionnant les sorties d'entraînement, la disposition de pignons, des accouplements axiaux etc.

Toutefois, les diverses réponses aux contraintes anciennes et nouvelles ne peuvent pas être adaptées à tous les problèmes à résoudre. Ainsi, par exemple, la fonction nouvelle dite « stop and start » selon laquelle le moteur thermique ne tourne pas continuellement, mais est arrêté momentanément au cours de l'utilisation d'un véhicule automobile selon des critères prédéterminés, demande la mise en place d'une machine électrique tournante capable de prendre le relais en entraînement lorsque le moteur thermique est arrêté.

Le but de l'invention est de proposer un emplacement pour une machine électrique tournante reliée à un moteur thermique, qui contribue à mieux exploiter que jusqu'à maintenant la place disponible dans un compartiment moteur d'un véhicule automobile.

Selon l'invention et conformément à la revendication 1, ce but est atteint par la disposition de la machine électrique entre le bloc moteur et le volant moteur, le stator de la machine électrique étant implanté essentiellement sur le bloc moteur alors que le rotor est implanté sur le volant moteur. Plus précisément, l'invention a donc pour objet un agencement d'une machine électrique du type discoïde dans un moteur à combustion interne comportant un bloc moteur avec une pluralité de cylindres dont les pistons sont associés à un vilebrequin et un volant moteur, ladite machine électrique comportant au moins un premier stator solidaire d'une face du bloc-moteur située en regard du volant moteur et un rotor solidaire du volant moteur, la machine électrique étant distante radialement du vilebrequin et disposée de part et d'autre de la face d'appui du volant moteur sur le vilebrequin .

Selon les règles de la conception d'un moteur à combustion interne, ou moteur thermique, celui-ci dispose d'une sortie de puissance sur laquelle on vient fixer un volant à moteur. Ainsi, on retrouve à une extrémité du moteur un dernier palier de vilebrequin puis, ménagée sur le vilebrequin, une portée cylindrique permettant d'assurer l'étanchéité de l'huile. Il s'ensuit qu'il existe un espace non négligeable entre la face d'appui du volant moteur et la tangente du premier cylindre du moteur thermique. C'est cet espace que la présente invention se propose d'utiliser pour y loger une machine électrique tournante.

Selon un mode de réalisation avantageux, cette machine électrique tournante est conformée pour remplir la fonction d'alterno-démarreur.

Outre qu'elle permet l'utilisation d'un volume « gratuit », la présente invention apporte par ailleurs encore un autre avantage, à savoir que le stator, implanté sur le bloc moteur, et ses points de fixation, rigidifient la structure du moteur thermique et en particulier la liaison moteur/boite de vitesses.

En ce qui concerne la conception du moteur thermique, la solution de l'invention apporte l'avantage que la face embrayage n'est pas modifiée et peut donc recevoir l'embrayage d'origine.

Un autre avantage est que la conception du moteur thermique du côté du volant moteur ne nécessite pas beaucoup de modifications pour pouvoir implanter le stator.

Par ailleurs, selon les contraintes d'implantation, le stator peut être de révolution complète ou partielle pour s'affranchir de proximités trop sévères avec le cylindre ou le palier de vilebrequin.

Selon l'invention, la machine électrique est dite discoïde à flux axial, le stator et le rotor étant alors constitués par des éléments discoïdes, le stator comprenant au moins un premier disque solidaire d'une face du bloc moteur située en regard du volant moteur et le rotor comprenant un second disque solidaire d'une face du stator volant moteur située en regard du bloc moteur. De préférence, le rotor et le stator sont disposés coaxialement.

Des machines dites discoïdes ne sont certes pas la technologie la plus répandue dans le domaine des machines électriques où la technologie de loin la plus courante consiste à disposer le rotor et le stator de manière concentrique mais cette technologie selon laquelle le rotor et le stator sont en fait deux disques disposés côte à côte en alignement axial se rencontre dans quelques applications spécifiques en particulier dans des moteurs de bateaux, de sous-marins et pour des éoliennes. dites « discoïdes ».

L'utilisation d'une machine électrique discoïde permet d'obtenir un démarrage rapide du moteur thermique, et cela grâce à un régime élevé qu'il peut atteindre dans un temps très court, on peut récupérer de l'énergie au freinage et, accessoirement, on met à disposition une puissance additionnelle développée par la machine électrique tournante, utilisable, par exemple, pendant les phases d'accélération renforcée.

D'autres caractéristiques et avantages de la présente invention ressortiront de la description ci-après d'un mode de réalisation de l'invention.

La description est faite en référence aux dessins dans lesquels :

la figure 1 rappelle, en une vue en coupe, la conception d'un moteur thermique du côté du volant moteur avant l'invention ;

la figure 2 montre comment l'espace entre le bloc moteur et le volant moteur peut-être utilisé pour y implanter une machine électrique ;

la figure 3 représente, en une vue en coupe, un premier agencement avec une machine discoïde comportant un seul stator ;

la figure 4A illustre les efforts axiaux dus au flux axial dans le cas d'un agencement tel que celui proposé à la figure 3 et la figure 4B illustre comment ces efforts peuvent être contrebalancer par un second stator, disposé de l'autre côté du volant :

la figure 5 représente un autre agencement, avec une machine discoïde comportant comme dans le cas de la figure 4B deux stators, avec un rotor disposé à la périphérie du volant.

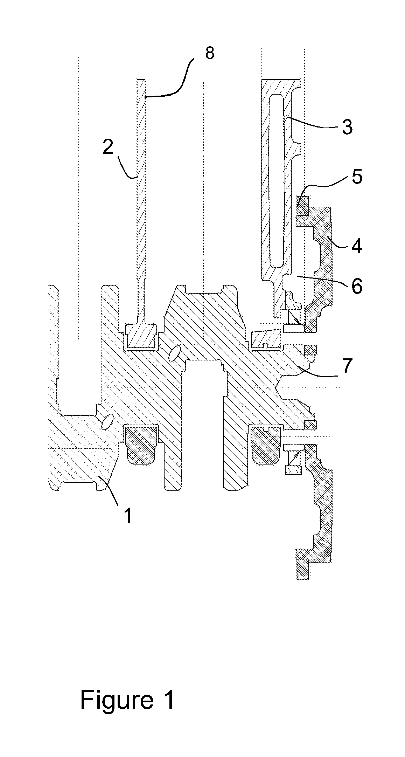

La figure 1 rappelle de manière très simplifiée, sur une vue en coupe, la conception d'un moteur thermique du côté du volant moteur. La figure 1 montre plus particulièrement un vilebrequin 1 sur lequel est montée une bielle 2 d'un piston une paroi 3 du bloc moteur et un volant moteur 4 situé dans la zone terminale ou nez 7 du vilebrequin. Le volant 4 est pourvu d'une couronne dentée 5 destinée à engrener avec un démarreur. Le volant moteur est situé sur le nez du vilebrequin, aboutant à ce dernier au niveau du plan 8.

On peut donc noter aisément un espace 6 inoccupé entre le volant moteur 4 et le bloc moteur.

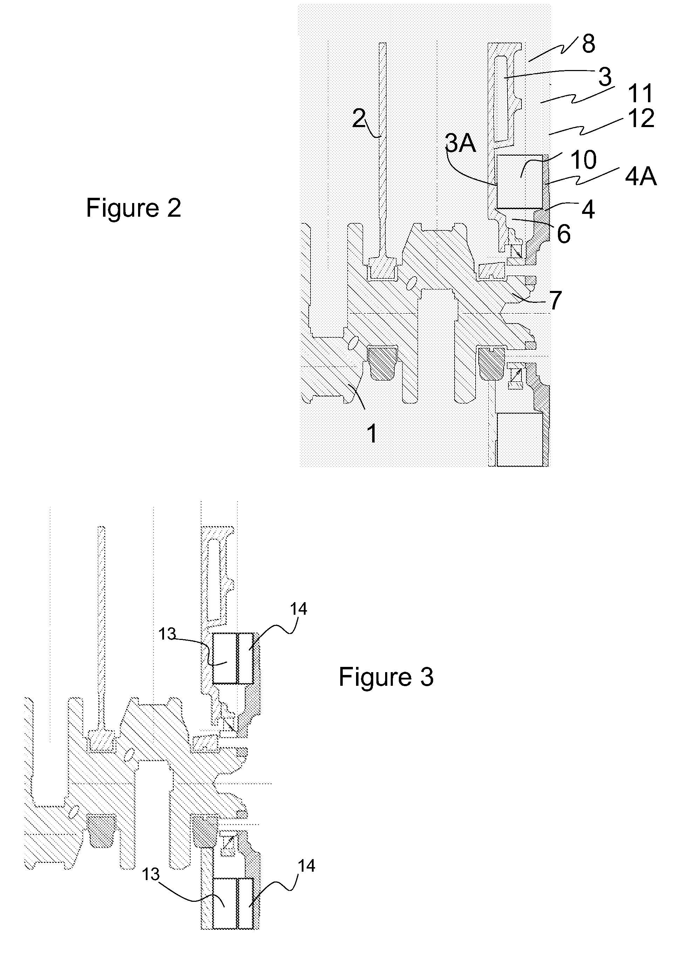

A la figure 2, on a illustré comment cet espace 6 pouvait être modifié pour permettre l'implantation d'une machine électrique 10 entre une paroi 3A du bloc moteur et une paroi 4A du volant moteur. Les parois 3A et 4A sont modifiées d'une part pour agrandir l'espace 6 et permettre ainsi d'y loger la machine électrique et d'autre part pour permettre de solidariser certaines parties de la machine électrique avec ces parois. De plus, le volant ne comporte plus de couronne dentée 5.

Par souci de simplicité, les éléments communs aux figures 1 et 2 ont été repris avec la même numérotation. Sur cette figure 2, il est important de noter que deux plans restent inchangés par rapport au moteur de série illustré figure 1 : le plan 8 correspondant à la face d'appui vilebrequin/volant et la position 12 de la face arrière du volant moteur (face friction de l"embrayage). La machine électrique est implantée autour du nez 7 du vilebrequin et du palier, à une distance radiale du vilebrequin, avec une partie implantée sur le volant moteur et une partie implantée sur le bloc moteur. Sur cette figure 2, on note bien qu'une partie de la machine électrique est implantée de part et d'autre du plan 8, avec une partie située en avant du nez du vilebrequin, (au niveau du volant moteur), sans que l'implantation de la machine électrique n'entraine la nécessité d'un quelconque recul sur de volant moteur par rapport au bloc moteur, de sorte que la longueur totale du moteur n'a pas à être modifiée

Selon l'invention, la machine électrique disposée entre le bloc moteur et le volant moteur est du type discoïde, comme illustré tout particulièrement figure 3 : le stator 13 et le rotor 14 sont deux disques dont les axes sont disposés parallèlement à l'axe du vilebrequin. Pour élargir l'espace 6, la paroi du bloc moteur devant recevoir un stator et/ou la paroi du volant moteur recevant le rotor peuvent être rectifiées par rapport à celles d'un moteur « standard »..

Cette modification peut se faire par simple usinage d'un bloc moteur conventionnel, ou par modification de celui-ci au stade de la coulée ce qui est bien sûr préférable du point de vue d'une application série. Pour autant, il est parfaitement possible de prévoir des variantes d'un même moteur avec ou sans machine électrique selon l'invention, qui vont correspondre par exemple à des véhicules avec ou sans option « stop and start », et ceci en respectant l'ensemble des dimensions du moteur.

Quelque soit le mode de réalisation choisi, l'entrefer entre le stator et le rotor doit être petit.

De plus, quel que soit le mode de réalisation retenu, il est clair que la forme du stator est déterminée en fonction de la place disponible. Ainsi, plutôt qu'un disque complet, le stator peut être de révolution partielle et/ou réalisé en plusieurs parties.

De même, les dimensions du rotor sont choisies en tenant compte de l'espace approprié, et notamment pourra être de révolution partielle. Le rotor peut être constitué par des aimants permanents ou des électroaimants ou encore en un acier ferromagnétique passif.

Stator et rotor sont fixés au bloc moteur ou respectivement au volant moteur par tout moyen approprié, notamment par collage, frettage ou assemblage mécanique.

L'électronique de puissance nécessaire au fonctionnement de la machine électrique, et non représentée sur les figures, pourra être fixée directement sur le carter moteur ou à quelconque autre endroit approprié du compartiment moteur.

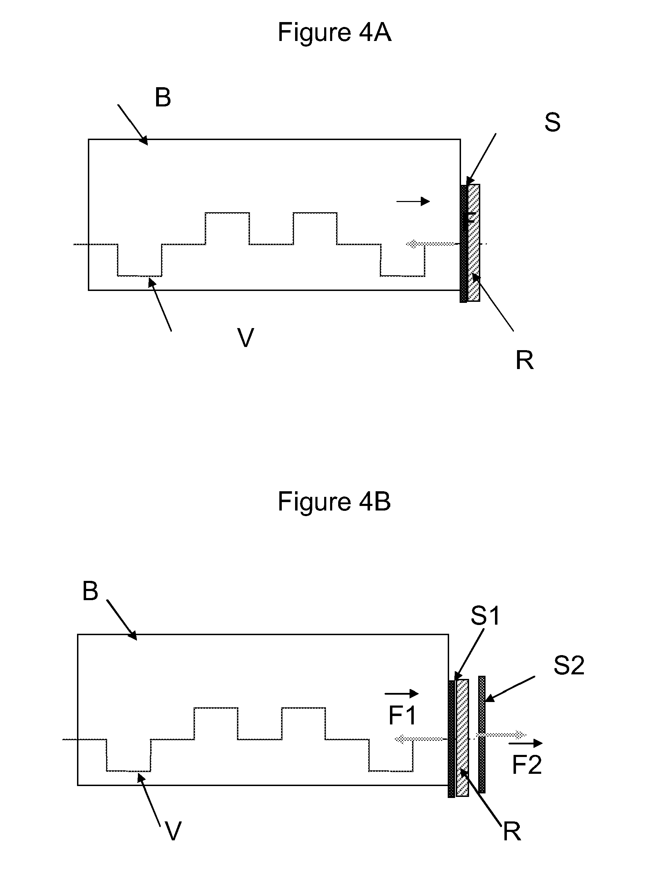

Dans une variante de l'invention tout particulièrement préférée et illustrée à l'aide de la figure 4A, la machine électrique comporte un second stator, que l'on va typiquement disposé en regard de la face arrière du volant moteur (le terme de face arrière étant ici employé pour désigner la face du volant moteur non tournée vers le bloc moteur, et donc tournée vers la boite de vitesses).

En effet, alors que dans les machines électriques classiques, concentriques, le flux magnétique est radial, dans une machine discoïde, le flux est axial, parallèle à l'axe du vilebrequin. Ce flux axial va engendrer un effort axial.

Or, dans le cas du démarrage d'un moteur automobile, le couple demandé à la machine électrique est élevé et cet appel de couple nécessite des densités de courant élevées et engendrent ainsi des efforts axiaux qui peuvent atteindre lors de démarrage à froid des niveaux de l'ordre de 10kN. Dans le cas où la machine électrique est placée en bout de vilebrequin, c'est bien le nez du vilebrequin qui sera directement impacté par cet effort axial qui va donc le fragiliser fortement.

Tel n'est pas le cas si, comme illustré à la figure 4B, on prévoir un second stator, de préférence identique au précédent, qui en jouant un rôle de miroir, va créer pour sa part des efforts axiaux identiques aux efforts axiaux dus au premier stator, mais dans la direction opposée, de sorte que les deux vecteurs de force s'annulent.

A noter que les performances de la machine globale disposant de deux stators sont quasiment égales à la solution simple (un rotor + un stator) pour un encombrement donné.

Le second stator doit bien sûr est solidarisé sur une partie fixe, comme par exemple le carter d'embrayage. A noter que si l'encombrement interdit de disposer d'un stator exactement de même dimension que le premier stator, il peut être utilisé un stator légèrement plus petit, capable de générer un flux axial dans une direction opposée au flux dû au premier rotor, avec simplement une composée résultante de l'addition des deux vecteurs non nulle, mais en tout état de cause, bien inférieure à la résultant de la variante avec un seul stator.

Le rotor reste identique dans la solution simple ou la solution à double stator, la seule précaution étant de prévoir un rotor non chapeauté sur sa face arrière.

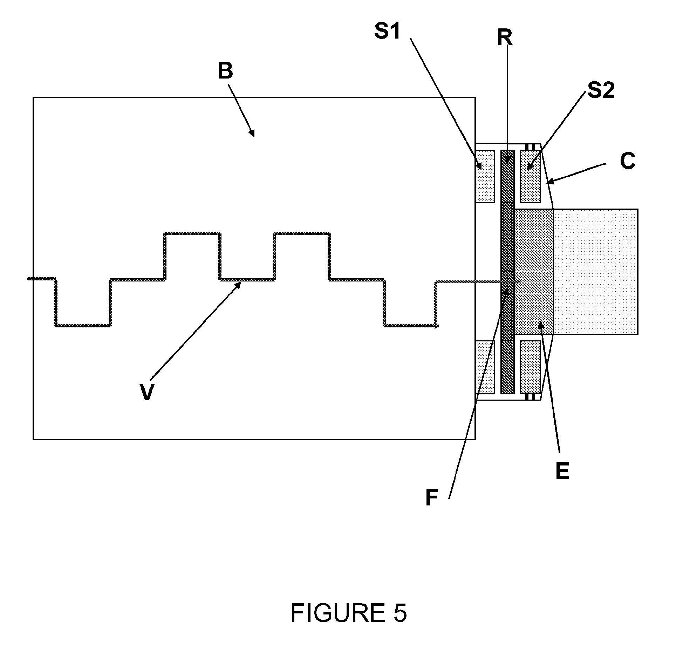

Compte tenu de l'encombrement du disque d'embrayage, il peut être plus spécialement avantageux d'écarter les éléments discoïdes comme illustré à la figure 5, selon un agencement tel que le rotor R de la machine électrique est en fait monté à la périphérie du volant moteur F qui sert en quelque sorte de jante au rotor R. Pour autant, le rotor participe comme dans les agencements précédents à l'inertie du volant moteur fixé au bout du vilebrequin V.

Dans l'agencement de la figure 5, le premier stator S1 est comme précédemment solidaire du bloc moteur B.

Le second stator S2 est fixé sur le carter d'embrayage S2, et essentiellement encercle la partie de l'embrayage associée au volant moteur. Avec un tel agencement, on observe qu'une modification du carter d'embrayage peut être nécessaire pour loger le second stator mais que globalement, la longueur totale du moteur n'est pas affectée par la présence de la machine discoïde.

La machine électrique peut être utilisée pour assurer différentes fonctions. Parmi celles-ci, citons tout particulièrement le démarrage du moteur (démarreur), la recharge de la batterie du véhicule (alternateur) ; ces deux fonctions étant typiquement combinées (alterno-démarreur), l'invention permettant un gain de compacité tout particulièrement intéressant avec les petits véhicules pour lesquels le compartiment moteur est nécessairement petit.

La machine électrique peut également être utilisée comme source d'énergie du véhicule. Il peut s'agit par exemple d'un complément d'énergie permettant de « booster » le véhicule en assurant un surcroît de puissance par exemple dans des phases d'accélération. Cette machine électrique peut également assurer l'énergie nécessaire pour le redémarrage du véhicule, pendant la période nécessaire au redémarrage du moteur lorsque celui-ci a été stoppé suite à l'arrêt temporaire du véhicule (application dite stop-and-start).

Enfin, comme la machine est disposée sur le volant moteur, elle peut être utilisée pour récupérer de l'énergie au freinage. Par ailleurs, comme la machine est couplée au volant moteur, et donc indirectement au vilebrequin, elle peut être utilisée pour minimiser les acyclismes du moteur en ajoutant un couple positif ou négatif. Rappelons que les acyclismes du moteur sont essentiellement dus au fait que les mouvements ascendants et descendant des pistons ne sont pas totalement équivalents et créent alternativement un effet d'accélération et de freinage au niveau du vilebrequin, acyclisme essentiellement compensé par le couple du volant moteur).
Les caractéristiques de la machine électrique dépendront bien entendu des utilisations envisagées. A titre indicatif, la puissance électrique d'un démarreur ou d'un alterno-démarreur est de l'ordre de 1,5KW. Si la machine électrique est utilisée pour la propulsion du véhicule (soit pour de courte période comme pour les applications dites « stop and start » soit pour des périodes prolongées comme pour les applications véhicule hybride, la puissance requise sera comprise entre 8 et 16 KW. Notons par ailleurs que comme la machine selon l'invention vient se loger dans un espace inoccupé, rien n'interdit d'utiliser en complément une machine électrique logée dans une position conventionnelle et de répartir ensuite l'ensemble de la puissance disponible pour les multiples applications souhaitées.

## Revendications

1. Agencement d'une machine électrique formée d'éléments discoïdes dans un moteur à combustion interne comportant un bloc moteur (3) avec une pluralité de cylindres dont les pistons sont associés à un vilebrequin (1) et un volant moteur (4), , **caractérisé en ce que** la machine électrique comporte au moins un premier stator solidaire d'une face (3A) du bloc-moteur (3) située en regard du volant moteur et un rotor solidaire du volant moteur (4), la machine électrique étant distante radialement du vilebrequin (1) et disposée de part et d'autre de la face d'appui (8) du volant moteur (4) sur le vilebrequin (1).

2. Agencement selon la revendication 1, **caractérisé en ce que** la face (3A) d'un bloc-moteur est rectifiée pour élargir la zone entre le bloc-moteur (3) et le volant (4) sans modifier l'implantation de la face d'appui (8) sur le vilebrequin (1).

3. Agencement selon la revendication 1 ou 2, dans lequel le rotor est disposé solidaire d'une face (4A) du volant moteur (4), située en regard du bloc moteur (3)

4. Agencement selon la revendication 3, **caractérisé en ce que** la face (4A) du volant moteur est rectifiée pour élargir la zone entre le bloc-moteur (3) et le volant (4) sans modifier l'implantation de la face d'appui (8) sur le vilebrequin (1)

5. Agencement selon la revendication 1 ou 2, **caractérisé en ce que** le rotor est disposé sur le flanc du volant moteur.

6. Agencement selon la revendication 1, **caractérisé en ce que** le rotor et le stator sont disposés coaxialement.

7. Agencement selon l'une quelconque des revendications précédentes, **caractérisé en ce que** la machine électrique comporte de plus un second stator monté du côté de la face du volant moteur opposée à la face en regard du bloc moteur, le second stator étant solidaire d'un carter.

8. Agencement selon la revendication 5 et la revendication 7, **caractérisé en ce que** le second stator est disposé autour du disque d'embrayage.

9. Agencement selon l'une des revendications 6 à 8, **caractérisé en ce que** le second rotor est un rotor miroir du premier stator.

10. Agencement selon l'une des revendications 6 à 9,, **caractérisé en ce que** le carter est le carter d'embrayage.

11. Véhicule automobile comportant un agencement d'un moteur thermique et d'une machine électrique selon l'une quelconque des revendications 1 à 7.

12. Véhicule selon la revendication 8, selon lequel la machine électrique assure l'énergie nécessaire au redémarrage du véhicule pendant le redémarrage du moteur lorsque celui-ci a été stoppé suite à l'arrêt temporaire du véhicule.

13. Véhicule selon la revendication 8 **caractérisé en ce que** la machine électrique produit un couple négatif ou positif, utilisé pour réduire les acyclismes du moteur.
